# EUROPEAN PATENT SPECIFICATION

(11) **EP 1 268 065 B1**
(45) Date of publication and mention of the grant of the patent: **02.11.2005**
(21) Application number: 00960190.7
(22) Date of filing: 24.07.2000
(51) Int. Cl.: B01L 3/02

(54) **SURFACE COATED HOUSING FOR SAMPLE PREPARATION**
OBERFLÄCHENBESCHICHTETES GEHÄUSE ZUR PROBENVORBEREITUNG
REVETEMENT DE SURFACE INTERIEURE POUR PREPARATION D'ECHANTILLONS

(30) Priority: 26.07.1999 US 145559 P
(43) Date of publication of application: 02.01.2003
(73) Proprietor: Harvard Apparatus, Inc., Holliston, MA 01746 (US); Shukla, Ashok, Woodstock, MD 21163 (US)
(72) Inventor: SHUKLA, Ashok, K., Woodstock, MD 21163 (US); SHUKLA, Mukta, M., Woodstock, MD 21163 (US); SHUKLA, Amita, M., Woodstock, MD 21163 (US)
(74) Representative: Chapman, Paul William
(86) International application number: PCT/US2000/040462
(87) International publication number: WO 2001/007162

(56) References cited:
- EP-A- 0 197 729
- WO-A-98/37949
- FR-A- 2 498 331
- US-A- 4 384 958
- US-A- 5 660 797
- PETERS T L: "A SYRINGE MOUNTABLE MICRO ADSORBENT COLUMN FOR THE CONCENTRATION OFORGANICS" RESEARCH DISCLOSURE,GB,INDUSTRIAL OPPORTUNITIES LTD. HAVANT, no. 399, 1 July 1997 (1997-07-01), page 453 XP000726581 ISSN: 0374-4353

## Description

### FIELD OF THE INVENTION

This invention relates to a tube or column, such as a pipette tip, for small sample preparation in which the interior surface is coated with a solid matrix for sample preparation. Said solid matrix is composed of a polymeric substance such as polytetrafluoroethylene (PTFE) and one or more column materials such as reactive or absorptive materials suited for sample filtration, separation or purification. The desired sample, containing bio-molecules such as DNA, proteins or other molecular components, is passed through said tube or column, which may be a pipette tip.

Depending on the specifications of the column materials in the solid matrix, selected molecules from the sample can be separated or purified by binding to, or by being entrapped in, the column material components of the solid matrix. The bound molecules can later be eluted from the solid matrix by the use of different solvents. The tube described in the present invention has an opening at the top end, through which the sample is introduced into the tube and an open end at the bottom, through which selected components of the sample flow through during the sample separation process. Said tube may be of any shape or size in any configuration suitable for a given set of experimental conditions. The present invention is suited for samples with volumes from nanoliters to milliliters.

### BACKGROUND OF THE INVENTION

Although a spectrum of analytical methods for small sample separation and purification have been developed, a number of problems, such as the slow speed of the separation process and the loss of sample volumes, limit the quality of currently available methods. The present invention describes a small sample preparation tube that both speeds up the sample purification and separation process and minimizes the extent of sample loss. This invention is a tube or pipette tip or container where the interior surface is coated with a solid matrix. The solid matrix contains a polymeric substance such as polytetrafluoroethylene (PTFE), as well as, column materials such as reactive or absorptive materials suited for sample filtration, size-based separation or purification. The column material can be composed of chromatographic media such as gel-filtration, ion-exchange, reverse-phase, and silica or modified silica media.

As mentioned above, currently available methods for the separation and purification of micro volumes of samples often result in undesirable sample loss. Since the volumes of desired molecules, such as proteins or bio-molecules, are often very small, the loss of even small volumes in such samples can represent a significant portion of the total sample. In currently available methods, sample loss often results due to the presence of filters or other components in the separation column. For example, currently available methods that use a filter or chromatographic material plug at the bottom of a pipette tip often result in the loss of sample on the filter or in the matrix containing the chromatography material. Since the volume of such a filter or plug may sometimes be as large as the volume of the micro sample itself, sample loss can be quite significant and is often accompanied by a slowed rate of separation. Also, different solvents interact differently with the filter itself further adding variation to the quality of the separation or purification of a particular sample.

One method that is currently available is the ZipTip developed by Millipore. This system consists of a micropipette tip that contains a cast of the column material in a porous matrix that is formed as a plug at the lower open end of the tip. Since the casted material plugs the open end through which the sample is pulled into the tip, however, the flow of the sample through the plug and into the tip may be slowed down or impeded by the plug. Furthermore, when this system is used in a multi-sample configuration such as a 96-well plate, there may be inconsistency in the quantity of sample that is absorbed into the different tips on the same plate and in the quality of the sample separation process itself.

A thin layer chromatography device comprising a transparent tube is described in US-A-4 384 958.

In the invention described herein, the solid matrix is applied to the tube or pipette tip or container such that it coats the interior sides of the tube without significantly obstructing the flow of the sample through the lower opening of the tip. The solid matrix may be affixed to the interior walls of the tube using any physical or chemical methods that include, but are not limited to adhesion, heat, pressure and etching. For optimal sample separation, the sample can be aspirated back and forth multiple times to ensure optimal binding of the desired bio-molecules to the column material in the solid matrix. The bio-molecules can then be eluted from the solid matrix using different solvents.

The solid matrix coating is composed of one or more inert materials such as PTFE (polytetrafluoroethylene) and the desired column materials. Said desired column materials adhere to the inner surface of the tube when used in combination with said inert materials resulting in a solid matrix that is effective for sample separation. Sample separation and purification tubes designed with such an interior coat of the solid matrix are highly effective because the sample can flow more easily through the tube, column or pipette tip chamber and it is in contact with a greater surface area of the coated solid matrix containing the column material. The quality of sample preparation is also enhanced due to increased consistency in performing the same procedure whether in a single or simultaneous, multi-tip framework.

For a better understanding of the invention, its advantages and objects, reference is made to the accompanying drawings and descriptive matter in which a preferred embodiment of the invention is illustrated.

### BRIEF DESCRIPTION OF THE DRAWINGS

The foregoing and still other objects of this invention will become apparent, along with various advantages and features of novelty residing in the present embodiments, from study of the following drawings, in which:
Figure 1 is an expanded view of a tube, a pipette tip, coated on the interior with a solid matrix, according to the present invention.

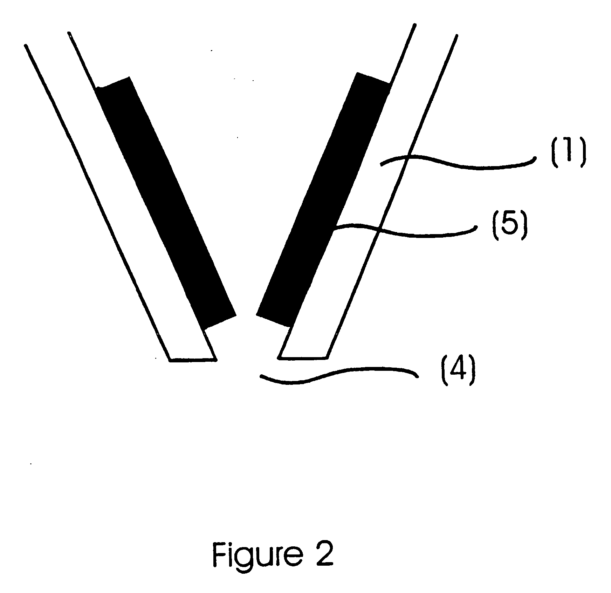

Figure 2 is an expanded view of the lower opening of a tube, a pipette tip, coated on the interior with a solid matrix, according to the present invention.

### DESCRIPTION OF THE PREFERRED EMBODIMENTS

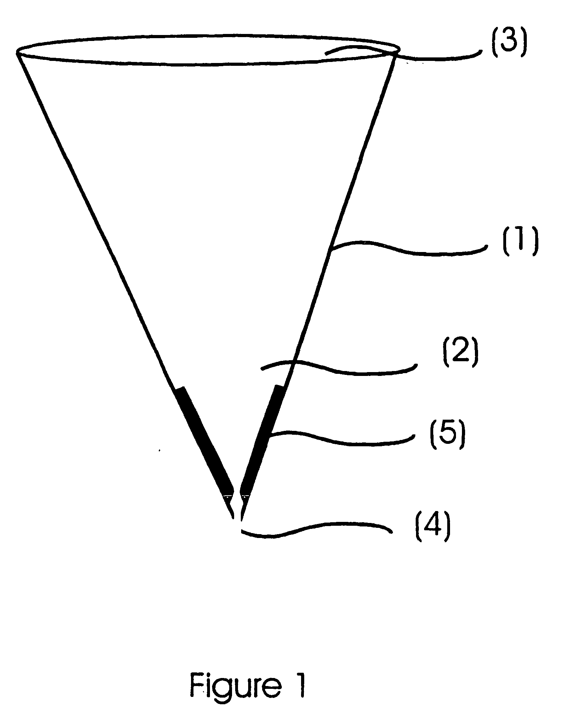

Referring to the drawings, Figure 1 shows a tube (1), in this instance a pipette tip that has a bottom end (2) and a top end (3) and an opening (4) in said bottom end. The tube (1) is coated on its interior sides with the solid matrix (5), as shown toward the bottom end of the tube in Figure 1. The solid matrix (5) is composed of both an inert material and a chromatographic material. Said inert material particles, which may consist of a combination of one or more different inert materials, aggregate and during aggregation the chromatographic material particles are entrapped/embedded within them resulting in the solid matrix.

The tube, shown in figure 1 as a pipette tip, can be made of any material and in any configuration depending on the specifications of a given experiment. Said tube (1) may enclose a volume from 0.0001 to 100 milliliters. Said tube can be of any shape or size and can be composed of combination of one or more different polymer materials from the group consisting of, but not limited to, polytetrafluoroethylene, polysulfone, polyethersulfone, cellulose acetate, polystyrene, polystyrene/acrylonitrile copolymer and PVDF. One or both ends of said tube may be tapered and said tube can consist of a configuration where the inner diameter of said bottom end (2) is less than the inner diameter of said top end (3). The coating (5) may be located anywhere on the interior surface of said tube (5).

The chromatographic material can be silica, non-silica, polymer-based, active charcoal, zirconium, titanium or other materials. The solid matrix, which can be in powder form or woven or non-woven sheet form, can consist of one or more chromatographic materials (such as a mix of cation and anion exchange materials). The column material can also consist of other chromatographic media, gels, bacteria, living cells or solid powder.

The chromatographic material particles can be chemically or physically modified and may be porous or nonporous. The sizes of the inert or chromatographic material particles can be from nanometers to micrometers.

The tube can be in a singular format or part of a multiple-tube format such as 8, 12, 96, 384 or 1536 - well micropipette plates. For example, 96 tips coated with the solid matrix in the interior can be used for the simultaneous preparation of up to 96 samples. Such multi-tip configurations can be designed with different numbers of tips forming the multi-tip system.

The tube (1) can have a cap or other mechanism to close one or both ends of the holding. Such a cap or similar device may or may not be attached to holding.

The broader usefulness of the invention may be illustrated by the following examples.

### Example 1. Purification of cytochrome c

In This experiment, we used a 10-200 microliter pipette tip that was coated with T-30 (Teflon dispersion from Dupont) containing 150 mg C-4 silica powder. 50 microliters of solution was pulled in the pipette tip and ejected. The solution remaining on the pipette-tip walls was air dried and washed several times with distilled water and isopropanol solution. After drying, the tip was used to purify a sample containing cytochrom-C and Tris/SDS buffer. The cytochrom-c solution was pulled at-least 10-20 times into the pipette-tip and then the pipette-tip was washed with water to remove the salt and SDS. The cytochrom-C which was bound to the coating on the tip was eluted with 70% isopropanol and water. The eluted solution was analyzed by HPLC.

### Example 2. Purification of albumin

This experiment is similar to Example 1. In place of cytochrom-C, bovine albumine was used and analyzed by HPLC.

While a specific embodiment of the invention has been shown and described in detail to illustrate the application of the principles of the invention, it is understood that the invention may be embodied otherwise as defined by the appended claims.

## Claims

1. A tube for small sample preparation having a volume between 0.0001 ml and 100 ml and comprising an open top end, an open bottom end, and a solid matrix coating on the interior surface of the tube, wherein the solid matrix coating comprises at least one chromatographic material and at least one inert polymer, and wherein the solid matrix coats the interior surface of the tube without significantly obstructing the flow of the sample.

2. The tube of claim 1, for the method of purification and separation of small sample volumes.

3. The tube of claim 1 or claim 2, for the method of purification of proteins, DNA and other biomolecules.

4. A pipette tip for small sample preparation comprising an open top end, an open bottom end, and a solid matrix coating on the interior surface of the pipette tip, wherein the solid matrix coating comprises at least one chromatographic material and at least one inert polymer, and wherein the solid matrix coats the interior surface of the pipette tip without significantly obstructing the flow of the sample.

5. The pipette tip of claim 4, where said pipette tip comprises a piston or similar device designed to pull the sample into the pipette tip or push it out of the pipette tip.

6. A container for small sample preparation comprising an open top end, a closed bottom end, and a solid matrix coating on the interior surface of the container, wherein the solid matrix coating comprises at least one chromatographic material and at least one inert polymer, and wherein the solid matrix coats the interior surface of the container without significantly obstructing the flow of the sample.

7. The pipette tip of claim 4 or claim 5, or the container of claim 6, wherein the volume of the pipette tip or container is between 0.0001 ml and 100 ml.

8. An array comprising 8, 12, 96, 384 or 1536 tubes of any one of claims 1 to 3, pipette tips of any one of claims 4, 5 or 7, or containers of claim 6 or claim 7.

9. The tube of any one of claims 1 to 3, the pipette tip of any one of claims 4, 5 or 7, or the container of claim 6 or claim 7, wherein the inert polymer is composed of a combination of one or more polymer materials selected from the group consisting of a polytetrafluoroethylene, a polysulfone, a polyethersulfone, a cellulose acetate, a polystyrene, a polystyrene/acrylonitrile copolymer, and a polyvinylidene fluoride.

10. The tube of any one of claims 1 to 3, the pipette tip of any one of claims 4, 5 or 7, or the container of claim 6 or claim 7, wherein the chromatographic material is one or more of a gel-filtration material, an ion-exchange material, a reverse-phase material or a silica.

11. The tube of any one of claims 1 to 3, the pipette tip of any one of claims 4, 5 or 7, or the container of claim 6 or claim 7 , wherein the chromatographic material is one or more of a silica, a modified silica, a polymer, active charcoal, zirconium, or titanium.

12. The tube of any one of claims 1 to 3, the pipette tip of any one of claims 4, 5 or 7, or the container of claim 6 or claim 7 , wherein the tube is a made of a polymer.

13. The tube, pipette tip or container of claim 12, wherein the polymer is composed of a combination of one or more polymer materials selected from the group consisting of a polytetrafluoroethylene, a polysulfone, a polyethersulfone, a cellulose acetate, a polystyrene, a polystyrene/acrylonitrile copolymer, or a polyvinylidene fluoride.

## Patentansprüche

1. Röhrchen zur Vorbereitung kleiner Proben, das ein Volumen zwischen 0,0001 ml und 100 ml besitzt und ein offenes oberes Ende, ein offenes unteres Ende und eine Feststoffbeschichtung auf der Innere Oberfläche des Röhrchens aufweist, wobei die Feststoffbeschichtung mindestens ein chromatographisches Material und mindestens ein inertes Polymer enthält und wobei der Feststoff die innere Oberfläche des Röhrchens bedeckt, ohne den Durchfluss der Probe wesentlich zu beschränken.

2. Röhrchen nach Anspruch 1 für das Verfahren der Reinigung und Abtrennung von kleinen Probenvolumina.

3. Röhrchen nach Anspruch 1 oder Anspruch 2 für das Verfahren zur Reinigung von Proteinen, DNA und anderen Biomolekülen.

4. Pipettenspitze zur Vorbereitung kleiner Proben, die ein offenes oberes Ende, ein offenes unteres Ende und eine Feststoffbeschichtung auf der inneren Oberfläche der Pipettenspitze aufweist, wobei die Feststoffbeschichtung mindestens ein chromatographisches Material und mindestens ein inertes Polymer enthält und wobei der Feststoff die innere Oberfläche der Pipettenspitze bedeckt, ohne den Durchfluss der Probe wesentlich zu beschränken.

5. Pipettenspitze nach Anspruch 4, wobei die genannte Pipettenspitze einen Kolben oder eine ähnliche Vorrichtung aufweist, die dafür konstruiert ist, die Probe in die Pipettenspitze zu ziehen oder sie aus der Pipettenspitze zu drücken.

6. Behälter zur Vorbereitung kleiner Proben, der ein offenes oberes Ende, ein geschlossenes unteres Ende und eine Feststoffbeschichtung auf der inneren Oberfläche des Behälters aufweist, wobei die Feststoffbeschichtung mindestens ein chromatographisches Material und mindestens ein inertes Polymer enthält und wobei der Feststoff die innere Oberfläche des Behälters bedeckt, ohne den Durchfluss der Probe wesentlich zu beschränken.

7. Pipettenspitze nach Anspruch 4 oder Anspruch 5 oder Behälter nach Anspruch 6, wobei das Volumen der Pipettenspitze oder des Behälters zwischen 0,0001 ml und 100 ml liegt.

8. Anordnung, die 8, 12, 96, 384 oder 1536 Röhrchen nach einem der Ansprüche 1 bis 3, Pipettenspitzen nach einem der Ansprüche 4, 5 oder 7 oder Behälter nach Anspruch 6 oder Anspruch 7 aufweist.

9. Röhrchen nach einem der Ansprüche 1 bis 3, Pipettenspitze nach einem der Ansprüche 4, 5 oder 7 oder Behälter nach Anspruch 6 oder Anspruch 7, wobei das inerte Polymer aus einer Kombination von einem oder mehreren Polymermaterialien zusammengesetzt ist, die aus der Gruppe bestehend aus einem Polytetrafluorethylen, einem Polysulfon, einem Polyethersulfon, einem Celluloseacetat, einem Polystyrol, einem Polystyrol-Acrylnitril-Copolymer und einem Polyvinylidenfluorid ausgewählt sind.

10. Röhrchen nach einem der Ansprüche 1 bis 3, Pipettenspitze nach einem der Ansprüche 4, 5 oder 6 oder Behälter nach Anspruch 6 oder Anspruch 7, wobei das chromatographische Material aus einem oder mehreren der folgenden Materialien besteht: einem Gelfiltrationsmaterial, einem Ionenaustauschermaterial, einem Umkehrphasenmaterial oder einer Kieselerde.

11. Röhrchen nach einem der Ansprüche 1 bis 3, Pipettenspitze nach einem der Ansprüche 4, 5 oder 6 oder Behälter nach Anspruch 6 oder Anspruch 7, wobei das chromatographische Material eines oder mehrere der folgenden Materialien ist: eine Kieselerde, eine modifizierten Kieselerde, ein Polymer, Aktivkohle, Zirkonium oder Titan.

12. Röhrchen nach einem der Ansprüche 1 bis 3, Pipettenspitze nach einem der Ansprüche 4, 5 oder 6 oder Behälter nach Anspruch 6 oder Anspruch 7, wobei das Röhrchen aus einem Polymer hergestellt ist.

13. Röhrchen, Pipettenspitze oder Behälter nach Anspruch 12, wobei das Polymer aus einer Kombination von einem oder mehreren Polymermaterialien besteht, die aus der Gruppe bestehend aus einem Polytetrafluorethylen, einem Polysulfon, einem Polyethersulfon, einem Celluloseacetat, einem Polystyrol, einem Polystyrol-Acrylnitril-Copolymer oder einem Polyvinylidenfluorid ausgewählt sind.

## Revendications

1. Tube pour la préparation de petits échantillons ayant un volume entre 0,0001 ml et 100 ml et comprenant une extrémité supérieure ouverte, une extrémité inférieure ouverte et un revêtement de matrice solide sur la surface intérieure du tube, le revêtement de matrice solide comprenant au moins un matériau chromatographique et au moins un polymère inerte, et la matrice solide recouvrant la surface intérieure du tube sans faire obstruction de façon significative à l'écoulement de l'échantillon.

2. Tube selon la revendication 1, pour le procédé de purification et de séparation de volumes de petits échantillons.

3. Tube selon la revendication 1 ou la revendication 2, pour le procédé de purification de protéines, d'ADN et d'autres biomolécules.

4. Pointe de pipette pour la préparation de petits échantillons comprenant une extrémité supérieure ouverte, une extrémité inférieure ouverte et un revêtement de matrice solide sur la surface intérieure de la pointe de pipette, le revêtement de matrice solide comprenant au moins un matériau chromatographique et au moins un polymère inerte, et la matrice solide recouvrant la surface intérieure de la pointe de pipette sans faire obstruction de façon significative à l'écoulement de l'échantillon.

5. Pointe de pipette selon la revendication 4, ladite pointe de pipette comprenant un piston ou un dispositif similaire conçu pour tirer l'échantillon dans la pointe de pipette ou le pousser hors de la pointe de pipette.

6. Récipient pour la préparation de petits échantillons comprenant une extrémité supérieure ouverte, une extrémité inférieure ouverte et un revêtement de matrice solide sur la surface intérieure du récipient, le revêtement de matrice solide comprenant au moins un matériau chromatographique et au moins un polymère inerte, et la matrice solide recouvrant la surface intérieure du récipient sans faire obstruction de façon significative à l'écoulement de l'échantillon.

7. Pointe de pipette selon la revendication 4 ou la revendication 5, ou récipient selon la revendication 6, dans lequel le volume de la pointe de pipette ou du récipient se situe entre 0,0001 ml et 100 ml.

8. Jeu comprenant 8, 12, 96, 384 ou 1536 tubes selon l'une quelconque des revendications 1 à 3, pointes de pipettes selon l'une quelconque des revendications 4, 5 ou 7, ou récipients selon la revendication 6 ou la revendication 7.

9. Tube selon l'une quelconque des revendications 1 à 3, pointe de pipette selon l'une quelconque des revendications 4, 5 ou 7, ou récipient selon la revendication 6 ou la revendication 7, dans lesquels le polymère inerte est composé d'une combinaison d'un ou plusieurs matériaux polymères sélectionnés parmi le groupe constitué d'un polytétrafluoroéthylène, d'une polysulfone, d'une polyéthersulfone, d'un acétate de cellulose, d'un polystyrène, d'un copolymère de polystyrène et d'acrylonitrile, et d'un poly (fluorure de vinylidène).

10. Tube selon l'une quelconque des revendications 1 à 3, pointe de pipette selon l'une quelconque des revendications 4, 5 ou 7, ou récipient selon la revendication 6 ou la revendication 7, dans lesquels le matériau chromatographique est un ou plusieurs matériaux parmi un matériau pour filtration sur gel, un matériau pour échange d'ions, un matériau pour phase inversée ou une silice.

11. Tube selon l'une quelconque des revendications 1 à 3, pointe de pipette selon l'une quelconque des revendications 4, 5 ou 7, ou récipient selon la revendication 6 ou la revendication 7, dans lesquels le matériau chromatographique est un ou plusieurs matériaux parmi une silice, une silice modifiée, un polymère, du charbon de bois actif, le zirconium ou le titane.

12. Tube selon l'une quelconque des revendications 1 à 3, pointe de pipette selon l'une quelconque des revendications 4, 5 ou 7, ou récipient selon la revendication 6 ou la revendication 7, le tube étant fabriqué en polymère.

13. Tube, pointe de pipette, ou récipient selon la revendication 12, dans lequel le polymère est composé d'une combinaison d'un ou plusieurs matériaux polymères sélectionnés parmi le groupe constitué d'un polytétrafluoroéthylène, d'une polysulfone, d'une polyéthersulfone, d'un acétate de cellulose, d'un polystyrène, d'un copolymère de polystyrène et d'acrylonitrile, ou d'un poly (fluorure de vinylidène).
